Europäisches Patentamt

European Patent Office

Office européen des brevets

(19)

(11) Publication number: 0 204 939
A2

# EUROPEAN PATENT APPLICATION

(12)

(21) Application number: 86105926.9

(22) Date of filing: 30.04.86

(51) Int. Cl.⁴: **A 23 L 1/072**
A 23 L 1/212, A 23 L 1/04
A 21 D 2/36

(30) Priority: 10.06.85 US 742831

(43) Date of publication of application:
17.12.86 Bulletin 86/51

(84) Designated Contracting States:
BE CH DE FR GB IT LI LU NL SE

(71) Applicant: National Starch and Chemical Corporation
10 Finderne Avenue Box 6500
Bridgewater New Jersey 08807(US)

(72) Inventor: Nappen, Bernard H.
19 Penn Road
Cranford New Jersey 07016(US)

(72) Inventor: Koval, Patricia L.
Route No. 519
Baptistown New Jersey 08803(US)

(74) Representative: Hagemann, Heinrich, Dr. et al,
Patentanwälte GEYER, HAGEMANN & KEHL Postfach
860329
D-8000 München 86(DE)

(54) Blends suitable for the preparation of formed fruit or vegetable pieces for food products.

(57) A fruit or vegetable blend suitable for the preparation of formed pieces consists essentially of 1-25% of the fruit or vegetable solids, 20-85% of a sugar, 3-12% added water, 0-10% pregelatinized starch, 0-30% bulking agent, 0-1% gum; and/or 0-10% oil or fat, the percentages being by weight and totalling 100%. The blend is formed under conditions of low shear and low temperature, preferably in a former extruder. The low fat, dry, shelf-stable pieces are useful in various food products including dry, cooked, or non-cooked preparations.

EP 0 204 939 A2

## BLENDS SUITABLE FOR THE PREPARATION OF
## FORMED FRUIT OR VEGETABLE PIECES FOR FOOD PRODUCTS

The present invention is directed to a dry blend suitable for the preparation of formed fruit or vegetable pieces for various food products and to the low shear forming method used for their preparation.

The prior art consists of natural fruits and berries packaged separately for later addition to the food product, treated fresh fruit pieces or dehydrated natural fruits and berries packaged with the food product, e.g., a dry mix, and artificial fruits and berries based on gums or fats. None of these products is entirely satisfactory.

The separately packaged products containing the natural fruits are expensive to produce, less convenient for the consumer to use, and it is still possible for the fruit to be damaged in texture during mixing and depositing operations. In addition, their high moisture content makes readjustment of the food formulation necessary to compensate for this added moisture.

Dehydrated fruit particles which contain about 5% moisture are unsatisfactory and costly. They fail to adequately hydrate when the mix containing the particles is reconstituted by the consumer. They do not approximate the flavor and texture of the real fruit. They have a tendency to absorb moisture from the mix or atmosphere during storage.

Partially dehydrated fruit pieces encapsulated with a plastic fat coating are described in U.S. Pat. No. 3,516,836 (issued to R. A. Shea).

The coating acts as a moisture barrier and melts during baking of the reconstituted products containing the pieces. The rehydration proceeds slowly and the texture and mouthfeel are not good.

Flavor particles based on colored and flavored fats are described in U.S. Pat. No. 3,582,353 (issued June 1, 1971 to I. M. Fehr et al.). The fat has a sharp melting point compatible with body temperature and a relatively slow flow rate so that each particle retains its integrity within a limited area in a baked food product incorporating such particles. The mouthfeel is not like that of a natural fruit - it is similar to butter. The flavored fat particles suffer from the drawbacks typical of high fat systems, i.e., oxidation, lack of temperature stability, and consumer resistance to high fat foods.

The artificial fruit particles based on gums are generally formed by reacting a gum such as an alginate solid with a metal ion solution. The beads have a relatively high moisture content and the evaporation of this moisture causes a hardening of the "shell" of the beads over a period of time. Further, when the beads are packaged with dry mixes, such as flour and the like, the beads dehydrate even further. This migration of moisture causes molding and caking of the dry mix. These beads have generally been sold in a moist or wet form. The lower moisture beads have been more favorably received but still do not totally meet the user's needs.

An improved artificially flavored particle (referred to as a lump) is described in U.S. Pat. No. 3,671,264 (issued June 20, 1972 to H. J. Drews et al.). The lump comprises 24.0-47.0% of a high melting point hydrogenated vegetable fat, 0.5-3.5.0% of a pregelatinized starch, 1.0-75.0% of a combination of sucrose and dextrose, and a flavoring agent. This product suffers from two disadvantages - namely, it is not based on natural fruits and it contains high levels of fat.

There is therefore a need for dry, shelf-stable fruit pieces which are based on natural fruits, which can be incorporated into dry, cooked, or non-cooked preparations which rehydrate to acceptably textured pieces.

The present invention provides a fruit blend suitable for the preparation of a formed fruit piece, which consists essentially of 1-25% of fruit solids from a dehydrated fruit or a fresh or frozen fruit concentrate having a soluble solids content of 40-70%; 20-85% of a sugar; 3-12% of added water, either present in the fruit concentrate, added to the dehydrated fruit, or added to the fruit blend; 0-10% of a pregelatinized starch; 0-30% of a bulking agent; 0-1% of a gum; and/or 0-10% of an oil or a fat; the percentages being by weight and totalling 100%; the piece to be formed under conditions of low shear and at a low temperature. A low temperature is a temperature below that at which the blend becomes excessively plastic. As used herein, the term fruit is intended to include vegetables as well as fruits. Typically, the mixture contains an edible salt, acid, humectant, and/or natural or artificial flavor. Preferably, the blend contains 7-15% fruit solids, 40-75% sugar, 5-8% water, 3-10% starch, 0.01-0.05% gum, and 3-5% oil or fat. The presence of the water is necessary for the formation; however, too much water can lead to the water-soluble materials solubilizing and losing shape. This is probably due to the sugar present dissolving and losing its crystalline form.

Preferably, the blend is processed in an extruder (i.e., worked, transported, and extruded), without the use of external heat, under low shear conditions, and at a low r.p.m., so as to compact and form the extrudate. If necessary, the temperature can be controlled by circulating water or cooling fluids through the hollow-shaft and hollow-flight forming extruder screws. This may be done in conjunction with, or in place of, the use of jacketed extruder barrels circulating water or a cooling fluid. The extrudate is warm to the touch, probably at a temperature below 60°C (140°F).

Generally, piece sizes and shapes may be changed by changing the die assembly or, in some cases, by merely changing the die inserts. A variable speed sizing knife at the die permits the control of the extrudate length. Typically, the extrudate benefits from a brief air cooling between the die and the sizing knife - usually for pieces that are to be used as ribbons. If the pieces are to be cut into morsels, the cutting can be carried out as the extrudate leaves the die. Suitable forming mechanisms include forming extruders, a Kitchen Aid meat grinder, a rubber mill, a tablet press, and the like. Particularly suitable are the forming extruders available from Wenger Manufacturing, Sabetha, Kansas which are available both as single screw and double screw with a split/hinged or sectional barrel. These forming extruders operate at 10-100 r.p.m. in contrast with cooker extruders which operate at 300-500 r.p.m. The extruded cut pieces are generally conveyed by an air vacuum or on a belt to the cooling area.

The resulting low moisture, low fat, fruit pieces have a fruit-like appearance, texture, and taste similar to that of the fruit from which they are prepared. Flow agents such as specialty starches (e.g.) as DRY-FLO® (available from National Starch and Chemical Corp.), granular sugar, or various silicon dioxides may be applied after the extrusion and cutting steps to prevent agglomeration during storage. Other advantages of these pieces include their all natural flavor and color, good shelf life, low water activity (typically less than 0.7), and ease of handling. In addition, they retain their structural integrity after baking and show minimal flavor loss after baking or freezing, as well as after reheating of finished baked products containing the morsels. The fruit blend can also be coextruded to produce foods with dual texture and taste, e.g., fruit-filled snacks. In addition to being useful in bakery products such as crackers, cookies, breads, rolls, and cakes, they can be used in cooked dessert products such as puddings and custards and non-cooked products such as ice cream, sherberts, cereal products, and salad dressings.

Typical fruits and vegetables include raspberries, blueberries, grapes, blackberries, boysenberries, strawberries, pineapples, apples, oranges, lemons, apricots, peaches, kiwis, mangoes, papayas, tangerines, tomatoes, peppers, corn, beets, and carrots and the like. The fruit (or vegetable) can be in the form of a fresh or frozen fruit concentrate, a dehydrated fruit such as that described in U.S. Pat. No. 4,417,405 (issued Nov. 29, 1983 to J. Fuller), or a drum-dried fruit-starch blend such as that described in U.S. Pat. No. 3,940,505 (issued Feb. 24, 1976 to B. H. Nappen). Preferably, the fruit (or vegetable) blend is composed of an all natural color and flavor system; however, blends of natural and artificial or all artificial colors and flavors can also be utilized if desired.

Suitable sugars include conventional mono- and disaccharides including, for example, sucrose, dextrose, lactose, fructose, corn syrup solids, and mixtures thereof. Preferably, a fine grind such as a Confectioner's sugar is used to improve mouthfeel. Also suitable are synthetic sugars such as polydextrose (available from Pfizer Chemical Co.) which are low in sweetness. Such sugars may be desirable for preparation of the vegetable pieces or for use in combination with artificial sweeteners for the preparation of low calorie fruit pieces.

The gums suitable for use herein include any of those typically used in food systems, such as alginates, guar gum, locust bean gum, xanthan gum, carageenan, pectin, methyl cellulose, hydroxypropyl cellulose, and mixtures thereof. The gums are dissolved in water prior to their addition to the mix. Heat was used, where necessary, to aid in solubilization of the gums, e.g. with a blend of locust bean and xanthan gum. The gum aids in the extrusion by acting as a slip agent; however, it is not required. It is preferred because of its water-holding and film-forming properties which are desirable in the extruded piece.

The food starches preferably present in the blend are typical pregelatinized starches, optionally modified by crosslinking or stabilization, which are selected according to the end use for the fruit pieces. The use of crosslinked starches aids in controlling the flow viscosity of the pieces when they are subjected to bakery temperatures. The starch helps to reduce boil-out or flow of the flavor pieces under these conditions; however, for some end uses (e.g., in ice cream) it is not required. Stabilized starches known for their freeze-thaw stability are used in frozen or refrigerated products. The pregelatinized starch is also valuable when liquid fruit concentrates and other natural flavors are used as flavorants instead of the dehydrated fruit; the starch provides the necessary solids, as well as water holding and film forming properties. Various starch sources can be used including, for example, corn, tapioca, waxy maize, potato, wheat, and the like.

The bulking agents suitable for use herein are wheat flour, whey, yeast, and the like. Such agents are used when it is desirable to reduce the sweetness of the blend, for example, with the vegetable blends.

The oils or fats used herein are typical food ingredients such as hydrogenated vegetable oils or fats. They should be stable to oxidation. The vegetable oil or fat is not needed for extrusion, but it does add significantly to the texture and mouthfeel of the finished product. A range of 2-7% appears optimal in most instances. If a solid fat is used, it can be melted prior to addition to the blend.

In the examples which follow, all parts are by weight and all temperatures are in degrees Celsius unless otherwise noted.

## Example I

This example describes the preparation of raspberry morsels.

A dry blend was formed by thoroughly blending together 44.12 parts finely ground sugar (Baker's special), 33.5 parts dextrose, 9.3 parts dry raspberry flavor (available from National Starch and Chemical Corp. under the No. 59-4304), 4.7 parts each of pregelatinized modified corn (available from National Starch and Chemical Corp. under the registered trademark TEXTAID®), and pregelatinized modified tapioca starch (available from National Starch and Chemical Corp. as National 104), , 0.9 part of salt (fine flake), and 0.5 part of citric acid. To the dry blend were added 2.0 parts of vegetable oil (Durkex 500 available from SCM). A blend was prepared by mixing together 0.02 part guar gum (4500 FF available from National Starch and Chemical Corp.) and 0.02 part of the above sugar and thoroughly dispersing them in 4.96 parts water. This liquid blend was then added to the dry blend and mixing was continued until all the components were thoroughly blended.

The fruit blend was fed into the feed tube of a Kitchen Aid meat grinder equipped with a die plate having 0.64 cm. (0.25 in.) orifices. The individual extruded strands were separated, allowed to cool to room temperature, and then cut into individual morsels.

## Example II

Using the above fruit blend, the extrusion was carried out in a Wenger Model F-25 low shear screw extruder, which is a jacketed water-cooled extruder fitted with a former screw and operated at about 16 r.p.m. When the extrusion was carried out with cooling, a satisfactory fruit piece resulted.

When a twin screw Werner Pfleiderer cooker extruder was used, the die temperature was set at 30°C, but the shear and compression within a short time (about 10-20 minutes) caused the temperature to rise to 43°C. Initially a stable product was extruded but as the temperature increased, the extrudate changed to a product resembling molten taffy which could not be handled or cut.

## Example III

Using the procedure of Example I, other fruit morsels were prepared using blueberry, lemon, apricot, and apple dry fruit flavors available from National Starch and Chemical Corp. under the Nos. 59-4300, 59-4017, 59-4311, and 59-4309, respectively.

## Example IV

This example demonstrates the preparation of pineapple morsels using a combination of drum dried fruit flavors.

The blend was prepared and extruded as in Example I using 33.53 parts sugar, 33.75 parts dextrose, 12 parts dry natural pineapple flavor (available from National Starch and Chemical Corp. under the No. 59-4309) and 2 parts dry natural apple flavor (see Example III), 3 parts each of the pregelatinized modified corn and tapioca starch of Example I, 1 part each of salt and sorbitol powder (available from Pfizer), 0.75 part citric acid, 0.03 part guar gum, 6.94 parts of water, and 3 parts vegetable oil.

## Example V

This example demonstrates that a fruit piece can be prepared using both natural and artificial flavor components.

The blend was prepared and extruded as in Example IV using 39.03 parts sugar, 38.19 parts dextrose, 4.00 parts dry apple flavor (see Example III) 0.06 part dry artificial apricot flavor, and the indicated amounts of the other ingredients.

## Example VI

This example demonstrates the preparation of tomato morsels using wheat flour as a bulking agent to replace part of the sugar in the fruit blend.

The blend was prepared and extruded as in Example IV using 17.0 parts sugar, 22.0 parts dextrose, 20 parts tomato powder, 12 parts of wheat flour, 6.0 parts dry apple flavor, 0.5 part natural tomato flavor (available from National Starch and Chemical Corp. under the No. 4876-71-2), 1 part citric acid, 7.44 parts water, 5.0 parts oil, and the indicated amounts of the other ingredients.

## Example VII

This example demonstrates the preparation of a vegetable morsel, i.e., a Jalapeno pepper morsel.

The blend was prepared and extruded as in Example IV using 13.75 parts sugar, 19.49 parts dextrose, 20 parts dehydrated red and green pepper powder (available from CVC), 15 parts wheat flour, 6 parts dry apple flavor (see Example III), 0.25 part Jalapeno pepper powder, 7.44 parts water, 7 parts oil, 3.03 parts salt, and the indicated amounts of the other ingredients.

0204939

## Example VIII

This example illustrates the use of liquid flavors and fruit concentrates (65° and 40° Brix) for making the morsels.

### Part A

The blend was prepared and extruded as in Example IV using 46.32 parts sugar, 33.50 parts dextrose, 2.80 parts pregelatinized modified tapioca starch of Example I, 1.90 parts modified pregelatinized corn starch of Example I, 1.90 parts modified pregelatinized waxy corn starch (available from National Starch and Chemical Corp. under the registered trademark INSTANT CLEARJEL®), 0.90 parts salt, 0.60 parts citric acid, 6.80 parts blueberry concentrate 65° Brix (i.e., 65% soluble solids), 0.70 parts liquid blueberry flavor (available from National Starch and Chemical Corp. under the No. 61-4306), 0.02 parts guar gum, 2.00 parts vegetable oil and 2.56 parts of water.

### Part B

The blend was prepared and extruded as above using 40 parts of a fine grind sugar (Confectioner's sugar), 29 parts dextrose, 8 parts grape concentrate (40° Brix), 7 parts dry apple flavor (see Example III), 4 parts dry natural grape flavor (available from National Starch and Chemical Corp. under the No. 59-4305), 1 part citric acid, 3 parts each of pregelatinized modified corn and tapioca starch of Example I, and the indicated amounts of sorbitol powder (a polyhydric humectant sold by Pfizer Chemical Co.), salt, and oil. The blend contained no gum.

## Example IX

This example shows the advantages provided by adding a gum and a humectant to the blend. The blends were extruded as in Example I.

## Part A

The dry blend of Example I was prepared without the guar gum. There was no difficulty in extruding the blend; however, the extrudate felt warmer and was more tacky than that prepared with the guar gum. After three weeks shelftime the raspberry morsels without the guar gum were also more friable.

## Part B

The dry blend of Example I was prepared with 1% sorbitol powder. The extruded raspberry morsels were improved in softness and chewability (an advantageous property when additional heating is not used in the preparation of the final food product). In addition, the morsel had a stronger fruit flavor and superior taste. The tackiness of the extrudate was not increased.

## Example X

This example shows the interdependence of the water and the gum in the blends, that the oil cannot produce the effect produced by the water in the blend, and that too much water cannot be present in the blend. The blends were extruded as in Example I.

## Part A

A blend similar to that of Example I was prepared by omitting the gum and water and increasing the oil level from 2 to 10% to improve the lubricity. The equipment jammed and the blend could not be extruded. Adding 0.01% guar gum and 2.48% water to the blend permitted extrusion with only slight jamming. The extrudate was very warm to the touch and fragmented more easily than the standard blend of Example I.

## Part B

A blend similar to that of Example I was prepared. The water and gum level were held constant (4.96% and 0.02%, respectively) while the oil level was adjusted to 2%, 7%, and 10% with appropriate changes being made in sugar and dextrose levels. As the oil level increased, the blend became progressively wetter and the extrudate was more fragile with a tendency to break into short sections.

## Part C

A blend similar to that of Example I was prepared without oil and gum but with high level of water (15% instead of 5%) and slightly higher level of sugar and dextrose (80% instead of 78%). The extrudate was too free flowing and did not retain its shape. When the water level was reduced to 7.5%, an acceptable extrudate was formed.

## Example XI

This example shows the use of the fruit morsels of the preceding Examples in various products.

### Sugar Cookies with Raspberry Morsels

A total of 10 g. of the morsels was blended into 90 g. of softened Pillsbury Slice and Bake Sugar Cookie Refrigerated Dough, reshaped, refrigerated, and then cut and baked. The cookie contained intact morsels, had an attractive appearance, and pleasant flavor when eaten.

### Muffins with Blueberry Morsels

A total of 50 g. of the morsels was added to a muffin batter prepared from a Duncan Hines Wild Blueberry Muffin Dry Mix (266.5 g. mix, 53 g. egg, and 130 g. water). The morsels remained suspended in the batter and did not sink to the bottom of the muffin tin during baking, adding both flavor and an appetizing appearance.

## Cold Breakfast Cereal with Raspberry Morsels

A total of 2.85 g. of morsels was added to 28.4 g. of Kellogg's Rice Crispies which were then combined with 137.25 g. of milk. The morsels remained intact for about 1.5 hours adding flavor.

## Marshmallow Treat with Raspberry Morsels

A total of 180 g. of raspberry morsels was added to a marshmallow and butter mixture which was prepared by melting 112 g. butter and 283 g. marshmallow, and 156 g. Kellogg's Rice Krispies. The final mixture was stirred until the fruit morsels and the cereal were well coated, pressed into a pan, and chilled. The added morsels (about 24% of the total mixture) gave a pleasant raspberry appearance and strong flavor to the finished confection.

## Granola Type Bar with Raspberry Morsels

Using the above procedure 120 g. of raspberry morsels were combined with 435 g. Quaker 100% Natural Cereal (rolled oats and rolled wheat) and a melted mixture of 75 g. butter and 190 g. marshmallows. The bar, formed as above, which contained only about 15% of the fruit in the total mixture, had an excellent appearance and flavor.

## Ice Cream with Raspberry Morsels

The morsels were added at a 10% level to vanilla ice cream. The appearance and taste were excellent.

Summarizing this invention provides a fruit blend suitable for preparing low moisture, low fat fruit (and vegetable) pieces and a process for their preparation by extrusion under low shear and low temperature conditions, as well as food products containing such pieces.

WHAT IS CLAIMED IS:

1. A fruit blend suitable for the preparation of a formed fruit piece, which consists essentially of a mixture of 1-20% of fruit solids from a dehydrated fruit or a fresh or frozen fruit concentrate having a soluble solids content of 40-70%; 20-85% of a sugar; 3-12% of added water, either present in the fruit concentrate, added to the dehydrated fruit, or added to the fruit blend; 0-10% of a pregelatinized starch; 0-30% of a bulking agent, 0-1% of a gum; and/or 0-10% of an oil or a fat; the percentages being by weight and totalling 100%; the piece to be formed under conditions of low shear and low temperature.

2. The blend of Claim 1, wherein an effective amount of the starch, bulking agent, gum, and/or oil or fat are present and wherein the piece is formed in an extruder.

3. The blend of Claim 2, wherein the dehydrated fruit or the fruit concentrate are present in an amount of 7-15%; the sugar is present in an amount of 40-75%; the water is present in an amount of 5-8%; the starch is present in an amount of 3-10%; the gum is present in an amount of 0.01-0.05%; and the oil or fat is present in an amount of 3-5%.

4. The blend of Claim 3, further comprising an edible salt, an acid, a humectant, and/or a natural or an artificial flavor.

5. The blend of Claim 4, wherein the fruit is selected from the group consisting of raspberries, blueberries, grapes, blackberries, boysenberries, strawberries, pineapples, apples, lemons, oranges, apricots, peaches, kiwis, mangoes, papayas, and tomatoes or from the group consisting of corn, peppers, beets, and carrots.

6. The blend of Claim 5, wherein the fruit is a fruit concentrate having 60-70% soluble solids or a dehydrated fruit.

7. The blend of Claim 3, wherein the sugar is a finely ground sugar selected from the group consisting of sucrose, dextrose, lactose, fructose, and polydextrose; wherein the gum is selected from the group consisting of guar gum, xanthan gum, and locust bean gum; and wherein the oil is selected from the group consisting of a hydrogenated vegetable oil or fat.

8. A dry, shelf-stable fruit piece, which is prepared by the steps of:

(a) forming a fruit blend under conditions of low shear and at a low temperature, the fruit blend consisting essentially of a mixture of 1-20% of fruit solids from a dehydrated fruit or a fresh or frozen fruit concentrate having a soluble solids content of 40-70%; 20-85% of a sugar; 3-12% of added water, either present in the fruit concentrate, added to the fruit concentrate, added to the dehydrated fruit, or added to the fruit blend; 0-10% of a pregelatinized starch; 0-30% of a bulking agent; 0-1% of a gum; and/or 0-10% of an oil or fat; the percentages being by weight and totalling 100%; and

(b) cooling the formed fruit piece at ambient temperature.

9. The dry piece of Claim 8, wherein the forming is carried out in an extruder and wherein the extruded piece is a ribbon which is cut into morsels after the extrusion step and prior to the cooling step.

10. A food product containing the dry fruit piece of Claim 8, the food product being selected from the group consisting of a dry, cooked, or non-cooked food preparation.